# EUROPEAN PATENT APPLICATION

(11) **EP 3 586 617 A1**
(43) Date of publication of application: **01.01.2020**
(21) Application number: 19382514.8
(22) Date of filing: 20.06.2019
(51) Int. Cl.: A01K 27/00

(54) **DEVICE FOR DRIVING PET LEASHES**

(30) Priority: 29.06.2018 ES 201831009 U
(71) Applicant: Corcuera Ocharan, Arkaitz, 01195 Alava (ES)
(72) Inventor: Corcuera Ocharan, Arkaitz, 01195 Alava (ES)
(74) Representative: Isern Patentes y Marcas S.L.

(57) **Abstract**

Driving device of pet leashes, attachable to a leash for remotely engaging or disengaging a collar or a harness of a pet, comprising a longitudinally displaceable cable (1), a hook (2), having a movable latch (3) for opening or closing the hook (2), attached to an end of the cable (1), a first spring (9) for pushing the latch (3) so as to maintain closed the hook (2), a puller (4), for driving the latch (3), located in the other end of the cable (1), a widening, (13) located in the same end of the cable (1) than the puller (4), and a second spring (15) located between the puller (4) and the widening (13) for absorbing undesired longitudinal displacements of the cable (1).

## Description

### OBJECT OF THE INVENTION

The present invention falls within the technical field of collars and leashes for animals and relates in particular to a driving device able to be coupled to pet leashes which enables the opening and closing of said leashes to be performed securely and remotely.

### BACKGROUND OF THE INVENTION

Many leash or harness elements are widely known in the current state of the art for travelling with a pet, generally a dog, through urban roads in safe conditions. Within these leashes there are different types, such as extensible, tracking or no-pull leashes. Likewise, they can be made of resistant materials with a certain elasticity, such as leather or nylon.

Said leashes are temporarily coupled, usually by means of a hook, to a collar which goes around the neck of the pet permanently. All types of leashes have as a common characteristic the need to perform the engagement and release of the harness or leash to the collar manually, by bending over and approaching the animal.

This fact has several disadvantages, highlighting first of all the discomfort caused by having to bend over for people with reduced mobility. Also, in the case of nervous or aggressive animals, approaching their head to engage or disengage the leash can entail the risk of bites or impacts.

The object of the present invention is to develop a driving device for pet leashes which enables the remote engagement and disengagement of the leash to the collar, in a comfortable and safe manner for both the animal and the person, avoiding the aforementioned disadvantages.

### DESCRIPTION OF THE INVENTION

The object of the invention consists of a driving device for pet leashes intended to be connected to a leash for remotely engaging and disengaging said leash in a collar or harness located on the neck of a pet.

To do so, the device comprises a cable, preferably made of steel and with a variable length, a hook connected to one end of the cable, and a puller for driving the device connected to the other end of the cable. The hook in turn has a movable latch for opening and closing, securely connected to the cable and displaceable by means of the puller. A first spring maintains the latch in a normally closed position on the hook.

The puller is formed by a bushing, which slides freely on the cable, and a flange for manual driving which extends from the bushing. A second spring limits the displacements of the bushing.

The displacement of the puller on the cable towards the second spring causes it to exert traction on said cable which causes it to move in the same direction. This traction overcomes the resistance of the spring, likewise displacing the latch connected to the cable at the other end thereof, such that it opens the hook.

The device thus described is a simple, economic and safe solution for performing the remote engaging and disengaging of the leash of a pet.

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings which, by way of illustration and not limitation, represent the following:
Figure 1.- Shows a top perspective view of the driving device, in which the main elements constituting it are seen.
Figure 2.- Shows a detailed view of the hook and the puller of the driving device.
Figure 3.- Shows a view of a transverse cross section of the device in the resting position, which is normally closed.
Figure 4.- Shows a view of a transverse cross section of the device in a first opening phase by driving the puller.
Figure 5.- Shows a view of a transverse cross section of the device in the open position, driven by the puller.
Figure 6.- Shows a view of a transverse cross section of the device in the open position, driven by the hook itself.

### PREFERRED EMBODIMENT OF THE INVENTION

A detailed explanation of a preferred exemplary embodiment of the object of the present invention is provided below with the help of the figures referred to above.

The driving device for pet leashes described is intended to be connected to a leash for remotely engaging and disengaging said leash in a collar or harness located on the neck of a pet.

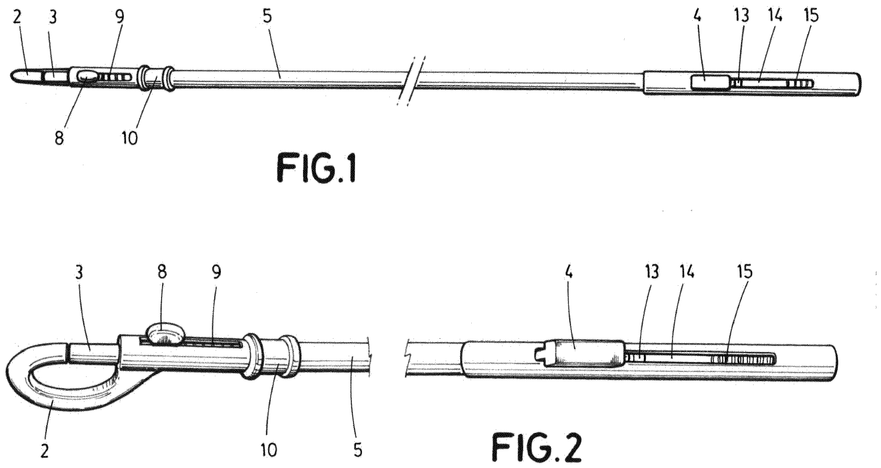

To do so, the device, shown in figure 1, is made up of a cable (1), a hook (2) which in turn has a movable latch (3) for opening and closing securely connected to one end of the cable (1), and a puller (4) for driving the latch (3) connected to the other end of the cable (1). A casing (5) with an essentially tubular geometry covers the cable (1), which is displaced inside said casing (5).

The hook (2), shown in detail in figure 2, is intended to be temporarily connected to a corresponding engagement located on a collar of a pet. The latch (3), with an essentially cylindrical geometry, in turn has a first end (6) intended to face and be in direct contact with the hook (2) which it closes, and a second end (7) through which it is securely connected to the corresponding end of the cable (1), and from which portion a projection (8) extends perpendicularly for direct manual driving of the latch (3).

One end of a first spring (9) is also securely connected to said second end (7), maintaining the latch (3) in a normally closed position on the hook (2). The first spring (9) is located coaxially on the cable (1), and at the other end thereof is fixed to a concentric ring (10) at the end of the casing (5) closest to the hook (2).

Furthermore, the puller (4), illustrated in detail in figure 2, is made up of a bushing (11), slidable on the cable (1), and a flange (12) which extends from the bushing (11) for manual driving of the puller (4). Likewise, the end of the cable (1) wherein the puller (4) is located ends in a widening (13), in contact with said puller (14) in order to exert a traction force on the cable (1). In this preferred embodiment, the widening (13) is a disk with diametrical dimensions greater than those of the cable (1).

The casing (5) likewise has an inner chamber (14), in the vicinity of the end where the puller (4) of the cable (1) is located, through the inside of which it longitudinally displaces the cable (1) driven by the puller (4). Said chamber (14) also houses a second spring (15) securely connected by one of the ends thereof to a final end of the chamber (14). The widening (13) acts on the other end of this second spring (15), which thus limits the longitudinal displacement of said cable (1).

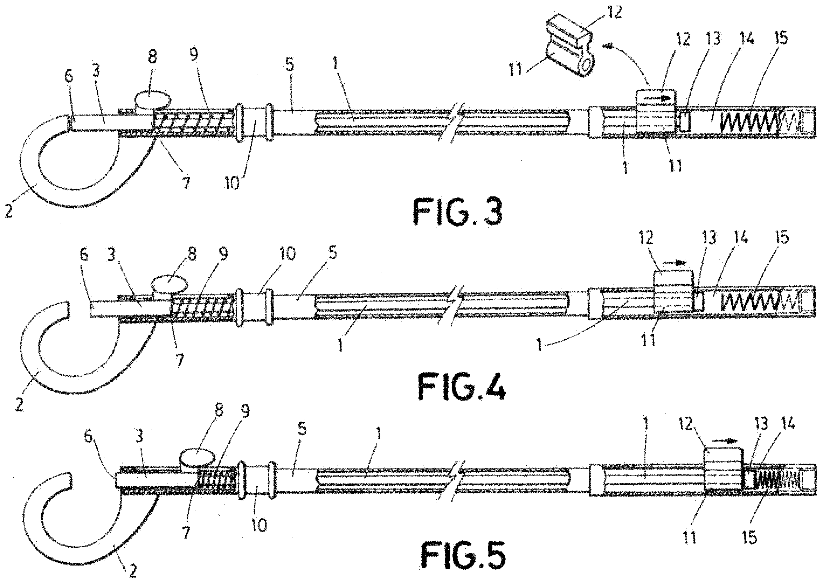

Figures 3 to 5 illustrate the opening and closing sequence of the hook (2) of the device, driven from the puller (4) in order to perform the corresponding disengagement and engagement with the collar of the pet. As seen in figure 3, in the resting position thereof, the first end (5) of the latch (3) is in direct contact with the hook (2) which it closes, while the springs (9, 15) are not deformed and the puller (4) can slide freely on the cable (1).

Figure 4 shows a first phase of the driving of the puller (4) for opening the hook (2). Thus, the driving of the puller (4) on the cable (1) in the direction of the second spring (15) causes this cable (1) to be displaced inside the chamber (14), overcoming the resistance of the first spring (9), such that the latch (3) is also displaced, connected to the cable (1) at the other end thereof, opening the hook (2), as shown in figure 4.

Figure 5 shows the situation of maximum deformation of the springs (9, 15), such that the latch (3) is completely open and the cable (1) cannot be displaced any more. At the same time as when the puller (4) is released, it stops deforming the second spring (15), whereby the first spring (9) returns to the equilibrium position thereof, displacing the latch (3) towards the hook (2) and, consequently, displacing in the same direction as the cable (1) to which it is securely connected.

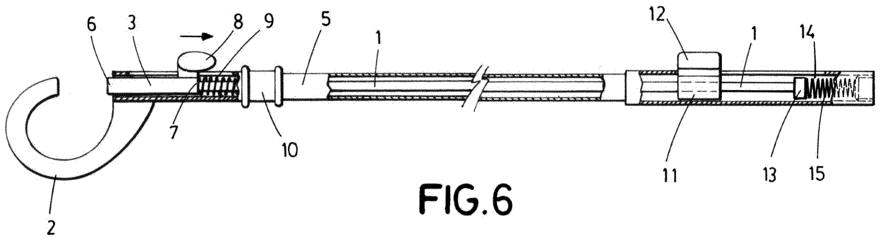

If the latch (3) is then opened by directly driving the projection (7) thereof, as illustrated in figure 6, the puller (4) is not displaced, since it is not securely joined to the cable (1), and the second spring (15) absorbs the displacement of the cable (1), preventing the displacement thereof.

## Claims

1. A driving device for pet leashes, attachable to a leash for remote engagement or disengagement of the leash in a collar or a harness of a pet, said device comprising:
- a longitudinally displaceable cable (1),
- a hook (2), which in turn has a movable latch (3) for opening and closing securely connected to one end of the cable (1),
- a first spring (9) for retaining the latch (3) on the hook (2),
- a puller (4) for driving the latch (3) located at the other end of the cable (1), and
- a widening (13) which extends from the end of the cable (1) where the puller (4) is located,
the device being **characterised in that** it incorporates a second spring (15) located between the puller (4) and the widening (13) for absorbing unwanted longitudinal displacements of the cable (1).

2. The driving device according to claim 1 **characterised in that** the puller (4) comprises:
- a bushing (11), slidable on the cable (1) in order to compress the second spring (14) against the widening (13) and
- a flange (12) which extends from the bushing (11) in order to manually drive the puller (4).

3. The driving device according to any of the preceding claims, **characterised in that** it incorporates a covering casing (5), which in turn has an inner chamber (14) located in one end of the casing (5).
